# EUROPÄISCHE PATENTSCHRIFT

(11) **EP 2 137 291 B1**
(45) Veröffentlichungstag und Bekanntmachung des Hinweises auf die Patenterteilung: **11.04.2012**
(21) Anmeldenummer: 08735180.5
(22) Anmeldetag: 11.04.2008
(51) Int. Cl.: C12C 7/22, C12C 7/20

(54) **VERFAHREN UND VORRICHTUNG ZUR WÜRZEKOCHUNG**
METHOD AND DEVICE FOR WORT BOILING
PROCÉDÉ ET DISPOSITIF POUR LA CUISSON DU MOÛT

(30) Priorität: 12.04.2007 DE 202007005389 U; 08.06.2007 DE 102007026587
(43) Veröffentlichungstag der Anmeldung: 30.12.2009
(73) Patentinhaber: Hertel, Katja, 7500 St. Moritz (CH)
(72) Erfinder: Hertel, Katja, 7500 St. Moritz (CH)
(74) Vertreter: Kopp, Stephan
(86) Internationale Anmeldenummer: PCT/EP2008/002880
(87) Internationale Veröffentlichungsnummer: WO 2008/125292

(56) Entgegenhaltungen:
- WO-A-2006/008064
- DE-U1-202005 020 713
- GB-A- 953 445
- GB-A- 2 182 672
- US-A1- 2003 044 500

## Beschreibung

Die Anmeldung bezieht sich auf ein Verfahren und auf eine Vorrichtung zur Würzekochung im Zuge eines Bierbrauprozesses.

Als Würze wird im Brauwesen das flüssige, klare Endprodukt bezeichnet, das bei der Herstellung von Bier am Ende des Läuterns entsteht. Die Würze wird im Zuge des herkömmlichen Bierbrauprozesses gekocht, um unerwünschte leichtflüchtige Fremdaromastoffe mit dem Kochdampf auszutreiben. Die Würzekochung dient weiterhin zur Koagulation des in der Würze enthaltenen Eiweißes, zur Zerstörung der Malzenzyme, zur Sterilisation der Würze und zur Isomerisierung von Hopfenbitterstoffen. Außerdem werden während der Würzekochung erwünschte Aromastoffe gebildet.

Bei einem klassischen Brauverfahren, wie es insbesondere in kleinen und mittleren Brauereien in der Regel betrieben wird, ist zur Würzekochung eine so genannte Sudpfanne vorgesehen, in welcher die Würze diskontinuierlich, d.h. chargenweise gekocht wird. Der während der Würzekochung entstehende Würzedampf wird dabei durch den Dampfauslass der Sudpfanne abgeleitet. Mitunter kommen, insbesondere im industriellen Brauwesen, weiterhin auch Verfahren zum Einsatz, bei welchen die Würze im kontinuierlichen Durchfluss beispielsweise mittels eines Entspannungsverdampfers gekocht wird. Gegenüber einer atmosphärischen Kochung unter Wärmezufuhr ist jedoch bei einer Entspannungsverdampfung eine insgesamt höhere Gesamtverdampfung erforderlich, um die gewünschte Abreicherung an unerwünschten, leichtersiedenden Aromastoffen zu erhalten.

Die Energiekosten stellen einen wesentlichen Kostenfaktor bei der herkömmlichen Bierherstellung dar. So beträgt der durchschnittliche Wärmebedarf für den Brauprozess ca. 145 bis 185 MJ/hl Verkaufsbier. Hierbei fällt mit 81 bis 128 MJ/hl Verkaufsbier der größte Energieaufwand auf die Würzebereitung, so dass in der Realisierung eines energiesparenden Würzekochverfahrens ein erhebliches Rationalisierungspotential liegt.

Aus der WO 2006/008064 A1 ist bekannt, die Würzebereitung durch eine Rektifikation der Würze vorzunehmen. Hierzu wird chargenweise die Würze in der Sudpfanne gekocht und der entstehende Würzedampf in eine Auftriebskolonne eingeleitet. In Gegenstromrichtung fließt Dampfkondensat oder aus der Sudpfanne abgezogene Würze die Kolonne herab, wobei dabei die flüssige Phase und die dampfförmige Phase auf den Kolonnenböden jeweils im Austausch stehen. Dabei reichert sich die höhersiedende Komponente in der Flüssigkeit und die niedrigsiedende Komponente im Dampf an. Dabei lässt sich die zur gewünschten Abreicherung der leichtflüchtigen, unerwünschten Fremdaromastoffe in der Würze benötigte Gesamtverdampfung und somit der Gesamtenergiebedarf im Vergleich zu einer herkömmlichen Kochung deutlich verringern. Dies liegt darin begründet, dass der der Auftriebskolonne entweichende Dampf nicht mehr im Gleichgewicht mit der Würze in der Sudpfanne steht.

Der Begriff Rektifikation oder Gegenstromdestillation bezeichnet ganz allgemein ein thermisches chemisches Trennverfahren, bei welchem durch Gegenstromführung zweier Phasen, insbesondere einer Dampfphase und einer in direktem Kontakt mit dieser stehenden Flüssigkeitsphase, mehrere Destillationsschritte diskret oder kontinuierlich hintereinander geschaltet sind.

Im Brauwesen wird Rektifikation im Zuge der Würzekochung bisher auch in Form eines "Stripping"-Verfahrens eingesetzt, bei welchem die Würze kontinuierlich in den Kopfbereich einer Abtriebskolonne eingeleitet und beim Abströmen innerhalb dieser Kolonne im Gegenstrom mit Inertgas oder Dampf beaufschlagt wird. An der Kontaktfläche zwischen der abströmenden Würze und dem gegenströmenden Dampf werden leichtflüchtige Aromastoffe von dem Dampf aufgenommen und somit aus der Würze entfernt. Derartige Verfahren, wie sie beispielsweise aus den Dokumenten DE 31 26 714 A1, US 4,550,029, WO 95/26395 und WO 97/15654 A1 bekannt sind, sind jedoch nur vergleichsweise aufwendig zu realisieren und können daher in der Regel nur im industriellen Brauwesen, nicht jedoch in kleinen und mittleren Brauereien wirtschaftlich eingesetzt werden.

Der Erfindung liegt die Aufgabe zugrunde, ein möglichst wirtschaftlich arbeitendes alternatives Verfahren zur Würzekochung mittels einer Rektifikation anzugeben. Der Erfindung liegt weiterhin die Aufgabe zugrunde, eine besonders geeignete Vorrichtung zur Durchführung des Verfahrens anzugeben.

Bezüglich des Verfahrens wird diese Aufgabe erfindungsgemäß gelöst durch die Merkmale des Anspruchs 1.

Danach wird die zu kochende Würze chargenweise und diskontinuierlich einer Sudpfanne zugeführt, jede der Sudpfanne zugeführte Charge der Würze im Umlaufverfahren aus der Sudpfanne abgezogen und über eine vom Würzedampf in der Sudpfanne getrenne Abtriebskolonne geleitet, der Abtriebskolonne Heißdampf oder heißes Inertgas zugeführt, die Würze in Gegenstrom mit dem Heißdampf oder dem Inertgas rektifiziert, und die rektifizierte Würze aus der Abtriebskolonne in die Sudpfanne zurückgeleitet.

Die Erfindung kombiniert somit die Vorteile der klassischen diskontinuierlichen Würzekochung, die insbesondere in deren vergleichsweise einfacher Realisierbarkeit und Handhabbarkeit bestehen, mit der durch ein Rektifikationsverfahren erreichbaren Effizienzsteigerung. Letztere äußert sich gegenüber einem einfachen Sudverfahren in einer wesentlichen Reduzierung der benötigten Gesamtverdampfung und infolgedessen in einer deutlichen Energieeinsparung.

Mit anderen Worten wird jede diskontinuierlich in die Sudpfanne eingeleitete Charge an Würze wie bei einem Außenkocher im Umlaufverfahren mittels der Abtriebskolonne rektifiziert und hierdurch in energiesparender Art und Weise von den leichtflüchtigen bzw. niedrigsiedenden Komponenten abgereichert. Der wesentliche Vorteil dieser Ausgestaltung ist, dass der Konzentrationsunterschied zwischen der Würze im Kolonneneinlauf und dem zugeführten Dampf bzw. der zugeführten Würze im unteren Kolonnenboden nicht mehr durch die in der Sudpfanne siedende Würze begrenzt ist, wie dies bei dem eingangs genannten diskontinuierlichen Rektifikations-Würzekochsystem gemäß der WO 2006/008064 A1 der Fall ist. Im Extremfall wäre jeder Würzeteil, der die Abtriebskolonne passiert, am Ende bereits frei von den unerwünschten leichtsiedenden Aromastoffen und die benötigte Gesamtverdampfung hätte ihr Minimum erreicht.

Die Größe der Abreicherung der leichtsiedenden Aromstoffe ist dabei nur von der Anzahl der Kolonnenböden sowie von dem Rücklaufverhältnis in der Abtriebskolonne abhängig.

Vorteilhafterweise wird die zugeleitete Würze auf dem unteren Kolonnenboden zur Bildung von Würzedampf erhitzt, wobei der entweichende Würzedampf der Abtriebskolonne als Heißdampf zugeführt wird. Bei dieser Ausgestaltung wird kein weiteres Prozessgas benötigt. Darüber hinaus kann die Stammwürze, d.h. im wesentlichen der Gehalt an Malzzucker, im nachhinein durch Verdampfen von Würze, d.h. im wesentlichen des darin enthaltenen Wassers, eingestellt oder korrigiert werden. Die Rektifizierkolonne wird insbesondere selbst nach Art eines Außenkochers zum Erhitzen und Verdampfen der zugeleiteten Würze eingesetzt. Die angegebenen Vorteile bleiben dabei erhalten, da auch hierbei der Konzentrationsunterschied zwischen der zulaufenden Würze und der Würze im unteren Kolonnenboden nicht durch die in der Pfanne siedende Würze begrenzt ist. Durch eine entsprechende Ausgestaltung der Kolonnen lässt sich auch hierbei erreichen, dass der aufsteigende Würzedampf nahezu keine leichtersiedenden Komponenten mehr enthält. Durch das Verdampfen der Würze auf dem unteren Kolonnenboden kann der Konzentrationsunterschied des Dampfkondensats, welches mit dem in die Kolonne einströmenden Dampf im Gleichgewicht steht, zur in die Kolonne einfließenden Würze frei gestaltet und somit optimiert werden. Dieser Konzentrationsunterschied kann durch das Vorsehen mehrerer Kolonnenböden und durch ein optimiertes Rücklaufverhältnis gesteuert und insbesondere erhöht werden.

In einer Weiterbildung des Verfahrens wird die Würze in der Sudpfanne auf einem vorgegebenen Temperaturniveau, insbesondere geringfügig unterhalb der Siedetemperatur, gehalten. Hierdurch wird erreicht, dass die Energieeinbringung der Abtriebskolonne oder deren Verdampfungsleistung sehr gering gehalten werden kann. Zudem laufen durch das Aufheizen und Heißhalten der Würze in der Sudpfanne die zeitabhängigen Prozesse in vollem Maße ab und der mengenabhängige Vorgang der Rektifizierung bzw. der Verdampfung kann auf ein Minimum reduziert werden. Somit lässt sich sicherzustellen, dass die mit der Würzekochung in Gang gesetzten biochemischen Reaktionen, insbesondere die Eiweißkoagulation, Enzymzerstörung, Würzesterilisation und Hopfenisomerisierung, in gewünschtem Ausmaß ablaufen. Die Rektifizierkolonne dient in diesem Fall nur der Rektifizierung bzw. der Verdampfung und kann somit bei jeder Sudpfanne in einfacher Art und Weise nachgerüstet werden.

Im Unterschied zu herkömmlichen "Stripping"-Verfahren laufen bei dem hier angegebenen Verfahren die räumlich getrennte Verdampfung bzw. Rektifizierung der Würze und deren Heißhaltung gleichzeitig ab, wodurch sich enorme zeitliche Vorteile ergeben.

Weiter bevorzugt wird die Würze von dem Boden der Sudpfanne der Abtriebskolonne zugeleitet. Hierdurch kann ein größerer Konzentrationsunterschied bezüglich der leichterflüchtigen Komponenten zwischen der in die Abtriebskolonne eingeleiteten Würze und dem ausströmenden Dampf und insbesondere dem in die Kolonne aufströmenden Würzedampf und somit eine weitere Verbesserung des Wirkungsgrades erreicht werden. Letzteres gilt insbesondere auch dann, wenn die Würze oberhalb des Würzepegels der Sudpfanne zugeleitet wird.

Zur weiteren Verbesserung der Energiebilanz wird vorteilhafterweise die Würze über einen Zusatzbehälter zurück in die Sudpfanne geleitet. Hierdurch kann der Konzentrationsunterschied der Würze zwischen Einlauf und Auslauf der Abtriebskolonne möglichst groß gehalten werden. Der Rücklauf der abgereicherten Würze und somit eine Verdünnung der Würze in der Sudpfanne wird durch einen derartigen Behälter nämlich zeitlich verzögert, so dass im Gegensatz zu einer Variante ohne Zusatzbehälter Würze mit höherer Konzentration in die Abtriebskolonne eingeleitet wird. Der Zusatzbehälter kann separat oder als Teil der Sudpfanne ausgebildet sein.

Zweckmäßigerweise wird die Würze in dem Zusatzbehälter über eine Anzahl von Überlaufbehältern geleitet. Hierdurch kann der Rücklauf der abgereicherten Würze in die Sudpfanne weiter zeitlich hinausgezögert werden. Denkbar wäre hierbei eine Ausgestaltung mittels Trennwänden, die die Würze, die aus der Abtriebskolonne zurückgeleitet wird, von der sich noch in der Sudpfanne befindlichen Würze für eine gewisse Zeit abtrennen. Durch eine solche Ausgestaltung ist es möglich, den Konzentrationsunterschied der Würze auch im Umlaufverfahren so groß zu halten, wie bei einem Verfahren mit zwei getrennten Behältern, zwischen denen eine Kolonne angebracht ist und wobei die Würze immer vollständig erst in den einen und danach in den anderen Behälter gepumpt wird. Im Übrigen ist auch das letztgenannte Verfahren im Sinne der vorliegenden Erfindung ermöglicht. Dabei erfolgt das Hin- und Herpumpen zwischen den beiden Behältern vorteilhaft bis zu einer jeweils vollständigen Entleerung. Bei jedem Hin- und Herpumpen wird dabei die Würze über die zwischen den Behältern angeordnete Kolonne geleitet.

Die Trennwände des Zusatzbehälters und/oder der Überlaufbehälter können zweckmäßigerweise zur Erhitzung der Würze herangezogen werden. Dazu könnten die Wände oder Trennwände beispielsweise als Heizplatten oder dergleichen ausgestaltet sein. Dadurch kann die Würze in der Sudpfanne aufgeheizt und auf annähernd Siedetemperatur gehalten werden.

Es ist auch vorstellbar, als Zusatzbehälter den Behälter zur Heißtrubabscheidung bzw. einen sogenannten Whirlpool-Heißtrubabscheider zu verwenden, in den die abgereicherte Würze aus der Abtriebskolonne geleitet wird. In diesem Fall kann ein einmaliger Durchlauf durch die Abtriebskolonne vorgesehen sein. Auf eine Rückführung der Würze in die Sudpfanne kann verzichtet werden.

Weiter bevorzugt wird die Würze in dem unteren Kolonnenboden durch eine Entspannungsverdampfung in den Würzedampf überführt. Bei einer Entspannungsverdampfung ist die Konzentration der leichterflüchtigen Komponente im Dampf um einen Faktor ω geringer als bei einer atmosphärischen Kochung, da der Dampf nicht im thermodynamischen Gleichgewicht mit der Flüssigkeit steht, welche in den Entspannungsverdampfer einfließt. Insofern ist zum Erreichen derselben Abreicherung einer leichterflüchtigen Komponente in der Würze mit einer Entspannungsverdampfung eine höhere Gesamtverdampfung erforderlich. Da die Konzentration der leichterflüchtigen Komponente im Dampf aber geringer ist als bei einer atmosphärischen Verdampfung kann die Rektifikation mit einem höheren Wirkungsgrad und damit mit einem weiter verringerten Energieaufwand durchgeführt werden. Dies gilt vor allem in der Anlaufphase der Rektifikation, da diese dann schneller ablaufen wird und somit verkürzt ist.

Um den Anlauf der Rektifikation bei einer Verdampfung der Würze zu verbessern, ist vorteilhafterweise zu Beginn des Umlaufverfahrens Wasser im untersten Kolonnenboden vorgelegt. Hierdurch wird gezielt bei Beginn des Verfahrens erreicht, dass der zur Rektifikation notwendige Konzentrationsunterschied zwischen dem aus dem unteren Kolonnenboden aufsteigenden Dampf und der sich im nächsten Kolonnenboden befindlichen Würze vorhanden ist. Die Konzentration der Würze an leichtflüchtigen Kom-ponenten ist gegenüber dem Wasserdampf, der keine solchen Komponenten umfasst, signifikant erhöht.

Zweckmäßigerweise wird der im Kopfbereich der Abtriebskolonne anfallende Heißdampf oder das Inertgas beispielsweise mittels eines Wärmetauschers, der als Kondensator für den Enddampf wirkt und in dem die Restwärme des Heißdampfes zumindest teilweise rückgewonnen wird, zur Erhitzung von Prozesswasser verwendet.

Das angegebene Verfahren ermöglicht es weiter, in der Sudpfanne und in der Abtrlebskolonne verschiedene Drücke einzustellen. Vorteilhafterweise kann der Druck dabei zwischen 1200 mbar und 600 mbar variieren. Durch einen höheren Druck und eine damit entsprechend höhere Temperatur in der Kolonne ergeben sich reaktionskinetische Vorteile. Wird der Druck bzw. die Temperatur in der Sudpfanne niedriger gehalten, so lässt sich eine höhere Ausdampfung der unerwünschten Fremdaromastoffe erreichen. Weiter kann durch eine solche Druckverteilung erzielt werden, dass in der Sudpfanne keine Druckdifferenz zum atmosphärischen Außendruck entsteht. Letzteres eröffnet die Möglichkeit, das Verfahren auch durch eine entsprechende Nachrüstung alter Sudpfannen zu betreiben.

Bezüglich der zugehörigen Vorrichtung wird die Aufgabe erfindungsgemäß gelöst durch die Merkmale des Anspruchs 9.

Demnach umfasst die angegebene Vorrichtung eine Sudpfanne und eine vom Würzedampf in der Sudpfanne getrenne Abtriebskolonne, wobei die Abtriebskolonne eingangsseitig über eine Würzezuleitung und ausgangsseitig am unteren Kolonnenboden über eine Würzeableitung mit der Sudpfanne verbunden ist, und wobei die Abtriebskolonne zur Einbringung von Heißdampf oder von heißem Inertgas in Gegenstromrichtung zur Würze ausgebildet ist.

Die Abtriebskolonne ist insbesondere als eine Bodenkolonne mit mindestens einem Kolonnenboden ausgebildet. Im Sinne einer verbesserten Durchmischung der zugeleiteten Würze ist optional mindestens ein Kolonneneinbau, insbesondere ein Kolonnenboden dieser Bodenkolonne, um die Achse der Abtriebskolonne rotationsangetrieben.

Alternativ ist die Auftriebskolonne als eine Packungskolonne mit mindestens einer starren Packung oder einer Packung aus losen Füllkörpern ausgestaltet. In Hinblick auf vorteilhafte Ausführungen von Kolonnenböden und Kolonnenpackungen wird auf K. Sattler, "Thermische Trennverfahren - Grundlagen, Auslegung, Apparate", 2. Aufl., VCH (Weinheim), 1995, Kapitel 2.5.6, S. 189 - 254 Bezug genommen.

Weitere Vorteile können den auf eine Vorrichtung gerichteten Unteransprüchen entnommen werden. Dabei sind die für das Verfahren geschilderten Vorteile sinngemäß zu übertragen.

Der angegebene Entspannungsverdampfer ist beispielsweise als ein Rohrbündelwäremtauscher ausgestaltet, den die Würze unter Druck durchfließt und wobei diese auf über 100°C erwärmt wird. Beim Austritt der überhitzten Würze findet die Entspannungsverdampfung statt.

Die angegebene Vorrichtung kann separat, insbesondere als Nachrüstung, zu einer bestehenden Sudpfanne einschließlich der gegebenen Erhitzungstechnologie eingesetzt werden. Es ist auch vorstellbar, die Vorrichtung mit einem gegebenen Außenkocher, beispielsweise einem Rohrbündelwärmetauscher, zu verbinden. Schließlich kann die gegebene Vorrichtung auch innerhalb der Sudpfanne angeordnet sein, wobei die Würze innerhalb der Sudpfanne abgezogen, durch die Abtriebskolonnen geleitet und wieder zurück in die Sudpfanne geführt wird.

Nachfolgend werden Ausführungsbeispiele der Erfindung anhand einer Zeichnung näher erläutert. Darin zeigen:
- Fig. 1: in schematischer Schnittdarstellung eine Vorrichtung zur Würzekochung, mit einer Sudpfanne und einer mit dieser verbundenen Ab- triebskolonne, wobei die Abtriebskolonne als Bodenkolonne ausgebildet ist,
- Fig. 2: in Darstellung gemäß Fig. 1 eine alternative Ausführungsform der Vorrichtung, wobei die Abtriebskolonne mit einer Heißdampfleitung zur externen Zuführung von Heißdampf ausgestattet ist und
- Fig. 3: in Darstellung gemäß Fig. 1 eine weitere Ausführungsform der Vorrichtung, bei welcher die Sudpfanne mit Zusatzbehältern für eine verzögerte Rückführung der rektifizierten Würze versehen ist.

Einander entsprechende Teile und Größen sind in allen Figuren stets mit den gleichen Bezugszeichen versehen.

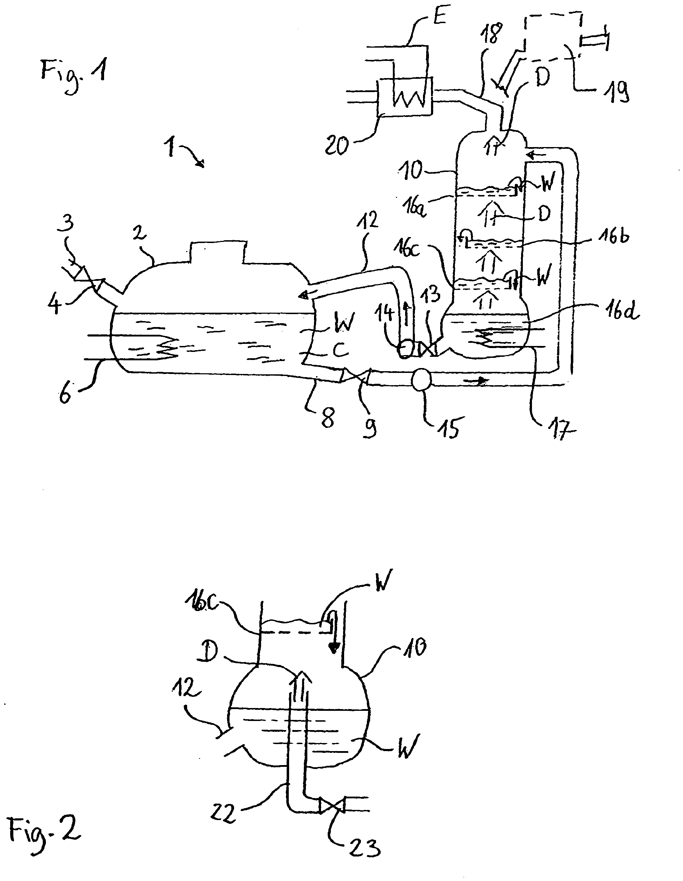

In Fig. 1 ist schematisch eine Vorrichtung 1 zur Würzekochung im Zuge eines Bierbrauprozesses dargestellt. Die Vorrichtung 1 umfasst eine Sudpfanne 2, wie sie auch bei einem herkömmlichen Bierbrauverfahren zur Würzekochung eingesetzt wird. Die Sudpfanne 2 ist mit einer Einlassleitung 3 verbunden, über welche die Sudpfanne 2 durch Betätigung eines in der Einlassleitung 3 angeordneten Einlassventils 4 mit einer diskreten (im Folgenden als Charge C bezeichneten Menge) der zu kochenden Würze W beschickbar ist. Die Sudpfanne 2 enthält weiterhin ein internes oder externes Heizelement 6, mittels welchem die in der Sudpfanne 2 aufgenommene Würze W geregelt auf eine vorgegebene Temperatur aufgeheizt werden kann.

Die Sudpfanne 2 ist weiter mit einer Würzezuleitung 8 verbunden, über welche durch Betätigung des Zuleitungsventils 9 die Würze W vom Boden der Sudpfanne 2 einer Abtriebskolonne 10 zugeleitet werden kann. Die sich nach Durchströmen der Abtriebskolonne 10 sammelnde Würze W wird schließlich über eine Würzeableitung 12 durch Betätigung des Ableitungsventils 13 wieder in die Sudpfanne 2, und zwar oberhalb des Würzepegels zurückgeführt. Zur Rückführung der Würze W ist eine Pumpe 14 vorgesehen. Mit anderen Worten wird jede der Sudpfanne 2 zugeleitete Charge C an Würze W im Umlaufverfahren durch die Abtriebskolonne 10 geleitet. In der Abtriebskolonne 10 wird dabei die durchlaufende Würze W rektifiziert bzw. fraktioniert destilliert, wobei die gewünschte Abreicherung an leichter siedenden, unerwünschten Aromastoffen erfolgt. Der Umlauf der Würze W kann als Naturumlauf ausgestaltet sein. In der gezeigten Ausführungsform weist die Vorrichtung 1 zur Umwälzung der Würze W eine nicht näher dargestellte Pumpe 15 auf. Ist die gewünschte Abreicherung der Würze W erfolgt, so kann die dann rektifizierte Charge C an Würze W über die Würzezuleitung 8 - nicht eingezeichnet - abgelassen werden.

Die Abtriebskolonne 10 ist bei dem Ausführungsbeispiel gemäß Fig. 1 als eine Bodenkolonne ausgeführt und enthält als Kolonneneinbauten mehrere Kolonnenböden 16a bis 11 d, die im Wesentlichen horizontal, und damit etwa senkrecht zu der Strömungsrichtung aufsteigenden Heißdampfes D, mit Abstand zueinander angeordnet sind. Jeder Kolonnenboden 16a-16d füllt den Querschnitt der Abtriebskolonne 10 mit Ausnahme eines Ablaufschachts für die sich auf dem Kolonnenboden 16a-16d jeweils sammelnde Würze W vollständig aus. Der Ablaufschacht eines jeden Kolonnenbodens 16a-16d ist jeweils im Randbereich des Letzteren, und somit benachbart zu einer Au-βenwand der Auftriebskolonne 10 angeordnet. Die Ablaufschächte benachbarter Kolonnenböden 16a-16d sind hierbei zueinander entgegengesetzt angeordnet, um den Würzeweg über die Böden zu leiten. Um einen Dampfdurchtritt durch die Kolonnenböden 16a-16d zu ermöglichen, sind die Kolonnenböden 16a-16d jeweils mit schematisch dargestellten Dampfdurchtrittsöffnungen versehen. Jede Dampfdurchtrittsöffnung ist als Schlitz, Bohrung, Hals, etc. ausgeführt. Optional ist im Bereich einer jeden Dampfdurchtrittsöffnung ein (nicht näher dargestelltes) Umlenkblech, insbesondere eine so genannte Glocke, für den aufsteigenden Heißdampf D vorgesehen. Um Wärmeverluste im Bereich der Abtriebskolonne 10 weitestmöglich zu vermeiden, ist deren Außenwand durch Isoliermaterial oder einen "Vakuummantel" isoliert.

In der dargestellten Ausführungsform sammelt sich die die Abtriebskolonne 10 durchströmende Würze W schließlich am unteren Kolonnenboden 16d. Dort befindet sich ein Heizelement 17, welches die gesammelte Würze W zur Erzeugung von Würzedampf erhitzt. Der entstehende Würzedampf strömt als Heißdampf D gemäß der eingezeichneten Pfeile in Gegenstrom zur herabfließenden Würze W nach oben, wobei der Würzedampf D und die Würze W auf jedem Kolonnenboden 16a-16d sowohl in Stoff- als auch in Temperaturaustausch stehen. Der oberhalb des obersten Kolonnenbodens 16a angeordnete Kopfbereich der Abtriebskolonne 10 ist mit einer Dampfablassleitung 18 verbunden, über welche der sich im Kopfbereich 15 ansammelnde Heißdampf D abgeleitet wird. In die Dampfablassleitung 18 ist ein Wärmetauscher 20 zur Rückgewinnung der Restwärme E des Heißdampfes D geschaltet. Die rückgewonnene Restwärme E wird mittels eines Kühl/Heiz-Kreislaufes anderen im Zuge des Brauprozesses anfallenden Verfahrensschritten, und insbesondere zur Erzeugung von heißem Prozesswasser, zugeführt. Trotz der für eine Rektifikation zur gewünschten Abreicherung an leichterflüchtigen Komponenten in der Würze W verringerten benötigten Gesamtverdampfung und selbst für den Fall, dass die Abtriebskolonne 10 alleine zur Verdampfung der Würze W eingesetzt wird, reicht in der Regel die im Heißdampf D enthaltene Restwärme E noch zu der beim Bierbrauprozess benötigten Erhitzung von Prozesswasser aus. Alternativ kann die Abtriebskolonne 10 mit einem Brüdenverdichter verbunden sein, durch welchen die Würze W im unteren Kolonnenboden 16d zum Sieden gebracht werden kann.

Zur Rückgewinnung von erwünschten leichtflüchtigen Aromastoffen, z.B. von Hopfenkomponenten, und insbesondere von Linalool, wird in einer alternativen Ausgestaltung die Dampfablassleitung 18 in eine Auftriebskolonne 19 geführt, und das entstehende Dampfkondensat in die Würze W zurückgeführt.

Zur Abreicherung der Würze W an leichterflüchtigen, unerwünschten Aromastoffen wird diskontinuierlich jeweils eine Charge C der zu kochenden Würze W in die Sudpfanne 2 eingeleitet und im Umlaufverfahren geregelt oder gesteuert durch die Abtriebskolonnen 10 geleitet. Durch die Erhitzung der sich am unteren Kolonnenboden 16d der Abtriebskolonne 10 sammelnden Würze W gelangt der aus der kochenden Würze W entweichende Würzedampf als Heißdampf D in die Abtriebskolonne 10 und durchströmt im Gegenstrom zur herabfließenden Würze W sukzessive die Kolonnenböden 16a-16c. Hierbei kondensieren Wasser und vergleichsweise schwerflüchtig Aromastoffe aus dem aufströmenden Heißdampf D aus und treten in die flüssige Phase der Würze W über, die sich auf den Kolonnenböden 16a-16d angesammelt hat. Die hierbei frei werdende Kondensationswärme wird dazu ausgenutzt, leichterflüchtige Komponenten (Aromastoffe) aus der Würze W wieder zu verdampfen.

Jedem Kolonnenboden 16a-16c ist ein im Bereich des jeweiligen Ablaufschachtes angeordnetes, nicht eingezeichnetes Überlaufwehr zugeordnet. Jedes Überlaufwehr ist dabei schwenkbar gelagert, um den zugeordneten Kolonnenboden 16a-16c bedarfsweise entleeren zu können. Anstelle eines schwenkbaren Überlaufwehrs kann zur Entleerung des jeweiligen Kolonnenbodens 16a-16c auch ein Entleerungsventil oder dergleichen eingesetzt werden. Die auf einem Kolonnenboden 16a-16c angesammelte Würze W fließt über den Ablaufschacht des jeweiligen Kolonnenbodens 16a-16c auf den jeweils nächst tiefer gelegenen Kolonnenboden 16b-16d.

Die partielle Destillation der Würze W vollzieht sich im besonderen Maße im Bereich eines jeden Kolonnenbodens 16a-16c, in welchem der aufsteigende Würzedampf bzw. Heißdampf D mit der zufließenden Würze W in direkten Kontakt kommt. Diese Zweiphasenzone besteht bei mittlerer Dampfbelastung aus einer Sprudelschicht und einer je nach Dampfbelastung mehr oder weniger ausgeprägten Sprühschicht als Mitreißzone für Kondensattröpfchen. In diesen Schichten werden durch Kondensation von Wasser und schwerflüchtigen Aromastoffen aus dem Heißdampf D die in der Gasphase verbleibenden leichtflüchtigen Aromastoffe sukzessive angereichert. Dieser Trenneffekt wird durch die freiwerdende Kondensationswärme verstärkt, indem die zuströmende Würze W erwärmt wird, wodurch mitkondensierte leichtflüchtige Aromastoffe aus der Würze W wieder verdampfen. Insgesamt wird durch diese mehrstufige Destillation in der Abtriebskolonne 10 die benötigte Gesamtverdampfung gegenüber einer Entspannungsverdampfung, gegenüber einer herkömmlichen diskontinuierlichen Rektifikations-Würzkochung oder gegenüber einer herkömmlichen atmosphärischen Kochung deutlich reduziert, um die Abreicherung unerwünschter leichtflüchtiger Aromastoffe in der herabfließenden Würze W in ausreichendem Maße zu erreichen.

Im Idealfall enthält die sich am unteren Kolonnenboden 16d sammelnde Würze W keine unerwünschten leichtflüchtigen Komponenten mehr, so dass zwischen dem aufsteigenden Würzedampf bzw. Heißdampf D und der sich im nächsthöheren Kolonnenboden 16c ein diesbezüglich maximal möglicher Konzentrationsunterschied gegeben ist. Hierdurch lässt sich die zur gewünschten Abreicherung der Würze W an leichtflüchtigen Komponenten benötigte Energie weiter verringern. Um die für die Rektifikation bzw. zur fraktionierten Destillation benötigten Konzentrationsunterschiede an leichtflüchtigen Komponenten zwischen dem aufsteigendem Würzedampf und der sich im nächsthöheren Kolonnenboden 16a-16c befindlichen Würze so groß als möglich zu halten, wird die Würze W vom Boden der Sudpfanne 2 abgeleitet und der Abtriebskolonnen 10 zugeführt. Die sich am Boden befindliche Würze W hat in Bezug zur zurückströmenden Würze noch die höchste Konzentration an derartigen Komponenten. Die Würzeableitung 12 mündet aus diesem Grund oberhalb des Würzepegels in die Sudpfanne 2.

Da in der Sudpfanne 2 ein herkömmliches Heizelement 6 zu Erhitzung der Würze W eingesetzt ist, braucht in die Abtriebskolonnen 10 nur die zur Verdampfung benötigte Energie eingebracht werden. Auf der anderen Seite kann durch das Heizelement 6 die Würze W in der Sudpfanne 2 derart beheizt werden, dass dort während einer herkömmlichen Würzekochung ablaufenden zeitabhängigen Prozesse, wie beispielsweise eine Eiweißkoagulation oder die Anreicherung von eine Bildungskinetik zeigenden unerwünschten und noch auszutreibenden Aromastoffen, ablaufen. Damit ist die Verdampfung und die Heißhaltung zwar räumlich getrennt, läuft aber gleichzeitig ab.

Um eine weitere Erhöhung des Konzentrationsunterschieds an leichtflüchtigen Komponenten zwischen dem aus dem unteren Kolonnenboden 16d aufsteigenden Würzedampf D und der sich im nächsthöheren Kolonnenboden 16c befindlichen Würze W zu erzielen, kann das Heizelement 17 als ein Entspannungsverdampfer beispielsweise in Form eines Rohrbündelwärmetauschers ausgestaltet sein. Hierdurch verringert sich - wie bereits erwähnt - die Konzentration einer leichtflüchtigen Komponente im Würzedampf D gegenüber einer atmosphärischen Kochung um einen Faktor ω.

Der Umlauf der Würze W durch die Abtriebskolonne 10 wird während der Durchführung des Verfahrens nach einer vorgegebenen zeitlichen funktionalen Abhängigkeit durch Steuerung der pro Zeiteinheit über die Würzezuleitung 8 aus der Sudpfanne 2 in die Abtriebskolonne 10 eingebrachten Würze W derart eingestellt, dass eine möglichst optimale Dauer der Kochphase und/oder eine möglichst geringe Gesamtverdampfung bis zur Erreicherung der gewünschten Abreicherung erzielt wird.

Fig. 2 zeigt die Auftriebskolonne 10 einer alternativen Ausführungsform der Vorrichtung 1. Man erkennt den Kolonnenboden 16c und den unteren Kolonnenboden 16d mit der darin gesammelten Würze W. Anstelle der Erzeugung von Würzedampf als Heißdampf durch Erhitzen der Würze W wird in die Abtriebskolonne 10 über eine Heißdampfleitung 22 durch Betätigung des Dampfventils 23 Heißdampf D oder heißes Inertgas zugeführt. Hierdurch könnten sich energetische Vorteile ergeben. Bei der Zuführung von reinem Wasserdampf (100°C) käme es aber zu keiner Erhöhung der Stammwürze, was bei der Kochung gegebenenfalls zu korrigieren ist.

Alternativ können einzelne der Kolonnenböden 16a-16d der Abtriebskolonnen 10 an einer zentralen, koaxial mit der Achse der Abtriebskolonne 10 geführten Welle rotationsangetrieben aufgehängt sind. In Folge einer wechselnden Anordnung zwischen rotierenden Kolonnenböden und nicht-rotierenden Kolonnenböden findet eine besonders gute Durchmischung der herabfließenden Würze W und ein besonders intensiver Kontakt der Würze W mit dem aufströmenden Heißdampf D statt. Alternativ oder zusätzlich zu rotierenden Kolonnenböden können auch ein oder mehrere rotierende Trichter, die die Würze W versprühen, vorgesehen sein.

Auch kann die Abtriebskolonne 10 als so genannte Packungskolonne ausgeführt sein. Die Abtriebskolonne 10 umfasst hierbei als Kolonneneinbauten anstelle von Kolonnenböden eine Kolonnenpackung. Die Kolonnenpackung ist wahlweise als starre, geordnete Gitterstruktur oder als lose Schüttung von Füllkörpern ausgebildet. Ähnlich wie bei einer Bodenkolonne beruht die Trennwirkung einer Packungskolonne auf dem direkten Kontakt des aufströmenden Heißdampfes D mit der innerhalb der Kolonnenpackung im Gegenstrom herabrinnenden Würze W. Die Packungskolonne stellt im Gegensatz zur Bodenkolonne keine diskret aufeinander folgende Destillationsschritte zur Verfügung. Vielmehr stellt sich innerhalb der Kolonnenpackung eine kontinuierlich zunehmende Abreicherung leichtflüchtiger Komponenten in der Würze W ein.

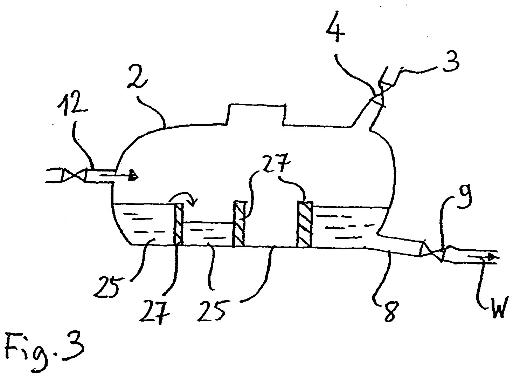

In Fig. 3 ist in einer weiteren Alternative der dargestellten Vorrichtung 1 eine Sudpfanne 2 gezeigt, die zur Verzögerung der zurücklaufenden rektifizierten Würze W eine Anzahl von Zusatzbehältern 25 aufweist, die über Trennwände 27 voneinander getrennt sind. Die über die Einlassleitung 3 eingefüllte Charge C an Würze W wird hierbei über die Würzezuleitung 8 in die Abtriebskolonne geleitet und gelangt von dort über die Würzeableitung 12 zurück in die Sudpfanne 2. Dort läuft sie zunächst in den ersten Zusatzbehälter 25, bis dieser überläuft und sich der nächste Zusatzbehälter 25 füllt. Auf diese Weise wird gewährleistet, dass die zurück laufende, rektifizierte Würze W sich nicht oder allenfalls zeitverzögert mit der in der Sudpfanne 2 noch befindlichen Würze W mischt. Hierdurch wird der Konzentrationsunterschied bezüglich der leichtflüchtigen, unerwünschten Komponenten zwischen der in die Abtriebskolonne fließenden Würze W und dem aufsteigenden Heißdampf vergrößert, was den Wirkungsgrad der Rektifikation verbessert.

Zur Erhitzung der Würze W in der Sudpfanne 2 sind die Trennwände 27 der als Überlaufbehälter ausgestalteten Zusatzbehälter 25 als Heizplatten ausgestaltet.

Für eine einfache Reinigung der Vorrichtung 1 sind die Sudpfanne 2 und die Abtriebskolonne 10 an eine (nicht näher dargestellte) CIP(Cleaning in Place)-Reinigungsanlage angeschlossen, wie sie bei einer herkömmlichen Brauanlage bereits zur Reinigung der Sudpfanne üblich ist.

### Bezugszeichenliste

- 1: Vorrichtung
- 2: Sudpfanne
- 3: Einlassleitung
- 4: Einlassventil
- 6: Heizelement
- 8: Würzezuleitung
- 9: Zuleitungsventil
- 10: Abtriebskolonne
- 12: Würzeableitung
- 13: Ableitungsventil
- 14: Pumpe
- 15: Pumpe
- 16: Kolonnenböden
- 17: Heizelement
- 18: Dampfablassleitung
- 19: Auftriebskolonne
- 20: Wärmetauscher
- 22: Heißdampfleitung
- 23: Dampfventil
- 25: Zusatzbehälter
- 27: Trennwände

- C: Charge
- W: Würze
- D: Heißdampf
- E: Prozesswärme

## Patentansprüche

1. Verfahren zur Würzekochung im Zuge eines Bierbrauprozesses, wobei
- die zu kochende Würze (W) chargenweise und diskontinuierlich einer Sudpfanne (2) zugeführt wird,
- jede der Sudpfanne (2) zugeführte Charge (C) der Würze (W) im Umlaufverfahren aus der Sudpfanne (2) abgezogen und über eine vom Würzedampf in der Sudpfanne (2) getrennte Abtriebskolonne (10) geleitet wird,
- der Abtriebskolonne (10) Heißdampf (D) oder heißes Inertgas zugeführt wird,
- die Würze (W) In Gegenstrom mit dem Heißdampf (D) oder dem Inertgas rektifiziert wird, und
- die rektifizierte Würze (W) aus der Abtriebskolonne (10) in die Sudpfanne (2) zurückgeleitet wird.

2. Verfahren nach Anspruch 1,
**dadurch gekennzeichnet,**
**dass** die zugeleitete Würze (W) auf dem unteren Kolonnenboden (16d) zur Bildung von Würzedampf erhitzt wird, und dass der entweichende Würzedampf (D) der Abtriebskolonne (10) als Heißdampf (D) zugeführt wird.

3. Verfahren nach Anspruch 1 oder Anspruch 2,
**dadurch gekennzeichnet,**
**dass** die Würze (W) über einen Zusatzbehälter (25) zurück in die Sudpfanne (2) geleitet wird.

4. Verfahren nach Anspruch 3,
**dadurch gekennzeichnet,**
**dass** die Würze (W) in dem Zusatzbehälter (25) über eine Anzahl von Überlaufbehältern geleitet wird.

5. Verfahren nach Anspruch 3 oder 4,
**dadurch gekennzeichnet,**
**dass** die Trennwände (27) des Zusatzbehälters (25) und/oder der Überlaufbehälter zur Erhitzung der Würze (W) herangezogen werden.

6. Verfahren nach einem der Ansprüche 2 bis 5,
**dadurch gekennzeichnet,**
**dass** die Würze (W) in dem unteren Kolonnenboden (16d) durch eine Entspannungsverdampfung in den Würzedampf (D) überführt wird.

7. Verfahren nach einem der Ansprüche 2 bis 4,
**dadurch gekennzeichnet,**
**dass** zu Beginn des Umlaufverfahrens Wasser im untersten Kolonnenboden (16d) vorgelegt wird.

8. Verfahren nach einem der vorhergehenden Ansprüche,
**dadurch gekennzeichnet,**
**dass** Restwärme (E) des Heißdampfes (D) oder des Inertgases aus der Abtriebskolonne (10) zur Erhitzung von Prozesswasser für die Würzebereitung rückgewonnen wird.

9. Vorrichtung (1) zur Durchführung des Verfahrens nach einem der Ansprüche 1 bis 8, mit einer Sudpfanne (2) und mit einer vom Würzedampf in der Sudpfanne (2) getrennten Abtriebskolonne (10), wobei die Abtriebskolonne (10) eingangsseitig über eine Würzezuleitung (8) und ausgangsseitig am unteren Kolonnenboden (16d) über eine Würzeableitung (12) mit der Sudpfanne (2) verbunden ist, und wobei die Abtriebskolonne (10) zur Einbringung von Heißdampf (D) oder von heißem Inertgas in Gegenstromrichtung zur Würze (W) ausgebildet ist.

10. Vorrichtung (1) nach Anspruch 9,
**dadurch gekennzeichnet,**
**dass** der untere Kolonnenboden (16d) der Abtriebskolonne (10) zur Erhitzung der zugeführten Würze (W) unter Bildung von Würzedampf als Heißdampf (D) ausgebildet ist.

11. Vorrichtung nach Anspruch 9 oder 10,
**dadurch gekennzeichnet,**
**dass** in der Sudpfanne (2) ein Heizelement (6) angeordnet ist.

12. Vorrichtung nach einem der Ansprüche 9 bis 11,
**dadurch gekennzeichnet,**
**dass** entlang der Würzeableitung (12) und/oder in der Sudpfanne (2) ein Zusatzbehälter (25) angeordnet ist.

13. Vorrichtung nach Anspruch 12,
**dadurch gekennzeichnet,**
**dass** der Zusatzbehälter (25) eine Anzahl von Überlaufbehältem umfasst.

14. Vorrichtung nach Anspruch 12 oder 13,
**dadurch gekennzeichnet,**
**dass** die Trennwände (27) des Zusatzbehälters (25) und/oder der Überlaufbehälter als Heizelemente ausgebildet sind.

15. Vorrichtung nach einem der Ansprüche 9 bis 14,
**dadurch gekennzeichnet,**
**dass** der untere Kolonnenboden (16d) zur Verdampfung der Würze (W) einen Entspannungsverdampfer umfasst.

## Claims

1. Method for boiling wort in a beer brewing process, wherein
- the wort to be boiled (W) is supplied in batches and discontinuously to a brewing kettle (2),
- each of the batches (C) of the wort (W) supplied to the brewing kettle (2) are withdrawn from the brewing kettle (2) in the recirculation process and fed over a descending stripping column (10) that is separate from the wort vapour in the brewing kettle (2),
- hot vapour (D) or hot inert gas is supplied to the descending stripping column (10), the wort (W) is rectified in counter flow with the hot vapour (D) or the inert gas, and
- the rectified wort (W) from the descending stripping column (10) is fed back into the brewing kettle (2).

2. Method according to claim 1,
**characterised in that**,
the wort (W) fed to the lower bottom of the column (16d) is heated to form wort vapour, and the escaping wort vapour (D) from the descending stripping column (10) is supplied as the heated vapour (D).

3. Method according to claim 1 or claim 2,
**characterised in that**,
the wort (W) is fed through an additional container (25) back into the brewing kettle (2).

4. Method according to claim 3,
**characterised in that**,
the wort (W) in the additional container (25) is fed through a number of overflow containers.

5. Method according to claim 3 or 4,
**characterised in that**,
the separation walls (27) of the additional container (25) and/or of the overflow container are used to heat the wort (W).

6. Method according to one of the claims 2 to 5,
**characterised in that**,
the wort (W) in the lower column bottom (16d) is transferred by flash evaporation into the wort vapour (D).

7. Method according to one of the claims 2 to 4,
**characterised in that**,
water is placed in the lowest column bottom (16d) at the beginning of the recirculation process.

8. Method according to one of the previous claims,
**characterised in that**,
the residual heat (E) of the hot vapour (D) or of the inert gas from the descending stripping column (10) is recovered for heating process water for the wort preparation.

9. Device (1) for carrying out the method according to one of the claims 1 to 8, with a brewing kettle (2) and with a descending stripping column (10) that is separate from the wort vapour in the brewing kettle (2), wherein the descending stripping column (10) at the inlet side is connected with the brewing kettle (2) over a wort feed line (8) and at the outlet side on the lower column bottom (16d) over a wort discharge line (12), and wherein the descending stripping column (10) is designed for introducing hot vapour (D) or hot inert gas in the counter flow direction to the wort (W).

10. Device (1) according to claim 9,
**characterised in that**,
the lower column bottom (16d) of the descending stripping column (10) is designed for heating the supplied wort (W) by forming wort vapour as the heated vapour (D).

11. Device according to claim 9 or 10,
**characterised in that**,
a heating element (6) is arranged in the brewing kettle (2).

12. Device according to one of the claims 9 to 11,
**characterised in that**,
an additional container (25) is arranged along the wort discharge line (12) and/or in the brewing kettle (2).

13. Device according to claim 12,
**characterised in that**,
the additional container (25) contains a number of overflow containers.

14. Device according to claim 12 or 13,
**characterised in that**,
the separation walls (27) of the additional container (25) and/or of the overflow container are designed as heating elements.

15. Device according to one of the claims 9 to 14,
**characterised in that**,
the lower column bottom (16d) contains a flash evaporator for evaporating the wort (W).

## Revendications

1. Procédé pour la cuisson du moût dans le cadre d'un processus de brassage de bière, dans lequel
- le moût à cuire (W) est acheminé par lot et de façon discontinue à une chaudière de brassage (2),
- chacun des lots (C) acheminé à la chaudière de brassage (2) est soutiré du moût (W) dans le processus en boucle de la chaudière de brassage (2) et conduit par une colonne de séparation (10) séparée de la vapeur du moût dans la chaudière de brassage (2),
- de la vapeur chaude (D) ou un gaz inerte chaud est acheminé(e) dans la colonne de séparation (10),
- le moût (W) est rectifié à contre-courant avec la vapeur chaude (D) ou le gaz inerte, et
- le moût rectifié (W) est réacheminé de la colonne de séparation (10) à la chaudière de brassage (2) .

2. Procédé selon la revendication 1,
**caractérisé en ce**
**que** le moût acheminé (W) est chauffé sur le corps de colonne inférieur (16d) pour former de la vapeur de moût, et en ce que la vapeur du moût (D) qui se dégage est acheminée à la colonne de séparation (10) en tant que vapeur chaude (D).

3. Procédé selon la revendication 1 ou la revendication 2,
**caractérisé en ce**
**que** le moût (W) est reconduit à la chaudière de brassage (2) en passant par un conteneur d'additifs (25).

4. Procédé selon la revendication 3,
**caractérisé en ce**
**que** le moût (W) est conduit dans le conteneur d'additifs (25) en passant par un certain nombre de conteneurs de déversements.

5. Procédé selon la revendication 3 ou 4,
**caractérisé en ce**
**que** les parois de séparation (27) du conteneur d'additifs (25) et/ou des conteneurs de déversement servent à chauffer le moût (W).

6. Procédé selon l'une des revendications 2 à 5,
**caractérisé en ce**
**que** le moût (W) est converti dans le corps de colonne inférieur (16d) par une expansion de vapeur en vapeur de moût (D).

7. Procédé selon l'une des revendications 2 à 4,
**caractérisé en ce**
**qu'**au début du processus en boucle, de l'eau est placée dans le corps de colonne le plus inférieur (16d).

8. Procédé selon l'une des revendications précédentes,
**caractérisé en ce**
**que** la chaleur résiduelle (E) de la vapeur chaude (D) ou du gaz inerte est récupérée de la colonne de séparation (10) pour chauffer l'eau de traitement pour la préparation du moût.

9. Dispositif (1) de réalisation du procédé selon l'une des revendications 1 à 8, comportant une chaudière de brassage (2) et une colonne de séparation (10) séparée de la vapeur du moût dans la chaudière de brassage (2), la colonne de séparation (10) étant reliée à l'entrée par une conduite d'amenée du moût (8) et à la sortie au corps de colonne inférieur (16d) par une conduite d'évacuation du moût (12) et la colonne de séparation (10) étant conçue pour insérer la vapeur chaude (D) ou le gaz inerte chaud à contre-courant dans le moût (W).

10. Dispositif (1) selon la revendication 9,
**caractérisé en ce**
**que** le corps de colonne inférieur (16d) de la colonne de séparation (10) est conçu pour chauffer le moût (W) acheminé en formant de la vapeur de moût en tant que vapeur chaude (D).

11. Dispositif selon la revendication 9 ou 10,
**caractérisé en ce**
**qu'**un élément chauffant (6) est disposé dans la chaudière de brassage (2).

12. Dispositif selon l'une des revendications 9 à 11,
**caractérisé en ce**
**que** le long de la conduite d'évacuation du moût (12) et/ou dans la chaudière de brassage (2), un conteneur d'additifs (25) est disposé.

13. Dispositif selon la revendication 12,
**caractérisé en ce**
**que** le conteneur d'additifs (25) comprend un certain nombre de conteneurs de déversement.

14. Dispositif selon la revendication 12 ou 13,
**caractérisé en ce**
**que** les parois de séparation (27) du conteneur d'additifs (25) et/ou du conteneur de déversement sont conçues comme des éléments chauffants.

15. Dispositif selon l'une des revendications 9 à 14,
**caractérisé en ce**
**que** le corps de colonne inférieur (16d) comprend un évaporateur instantané pour l'évaporation du moût (W).
